# EUROPÄISCHE PATENTSCHRIFT

(11) **EP 1 685 011 B1**
(45) Veröffentlichungstag und Bekanntmachung des Hinweises auf die Patenterteilung: **06.02.2008**
(21) Anmeldenummer: 04786736.1
(22) Anmeldetag: 10.09.2004
(51) Int. Cl.: B60S 1/08, G01N 21/55

(54) **REGENSENSOR FÜR GLASSCHEIBEN, INSBESONDERE FÜR FRONTSCHEIBEN VON KRAFTFAHRZEUGEN**
RAIN SENSOR FOR GLASS PANES, IN PARTICULAR FOR WINDSCREENS OF MOTOR VEHICLE
DETECTEUR DE PLUIE DESTINE A UNE VITRE, NOTAMMENT AU PARE-BRISE DE VEHICULES AUTOMOBILES

(30) Priorität: 08.11.2003 DE 10352235
(43) Veröffentlichungstag der Anmeldung: 02.08.2006
(73) Patentinhaber: ROBERT BOSCH GMBH, 70442 Stuttgart (DE)
(72) Erfinder: WOLF, Frank, 77815 Buehl (DE); MATUSEVICH, Vladislav, 07743 Jena (DE); TETTWEILER, Manfred, 26386 Wilhelmshaven (DE); KOWARSCHICK, Richard, 07907 Schleiz (DE)
(86) Internationale Anmeldenummer: PCT/DE2004/002014
(87) Internationale Veröffentlichungsnummer: WO 2005/049396

(56) Entgegenhaltungen:
- DE-A1- 3 825 665
- DE-A1- 4 329 188
- DE-A1- 19 701 258
- US-A1- 2002 040 964

## Beschreibung

### Stand der Technik

Die Erfindung betrifft einen Regensensor nach dem Oberbegriff des unabhängigen Anspruchs.

Ein derartiger, nach dem Prinzip der Totalreflexion arbeitender Regensensor, der zur Steuerung von Scheibenwischer-Anlagen in Kraftfahrzeugen dienen kann, ist bereits aus der DE 197 01 258 A1 bekannt.

Regensensoren können beispielsweise Regentropfen, Tautropfen, Nebeltropfen, angeschmolzene Schneeflocken oder angetaute Hagelkörner als Feuchtigkeitstropfen detektieren. Es ist bereits eine Vielzahl von Regensensoren bekannt, die sich vor allem durch den Einsatz von einer der in Frage kommenden optischen Methoden unterscheiden. Bekannt ist beispielsweise die Auswertung von an Feuchtigkeitspartikeln gestreutem Licht oder die photogrammetrische Beobachtung der mit Feuchtigkeit benetzten Außenseite der Glasscheibe.

Die gegenwärtig aussichtsreichste Methode benutzt das Prinzip der Totalreflexion und basiert auf der feuchtigkeitsabhängigen Teilauskopplung eines Lichtstrahls aus einem Lichtkanal in einer Glasscheibe. Die Begrenzungsflächen der Scheibe reflektieren dabei das mit Hilfe eines Koppelmittels, beispielsweise eines Prismas, in einem ausreichend großen Winkel in die Scheibe eingebrachte Licht zunächst total, da der Lichtstrahlwinkel bei trockener Grenzfläche groß genug ist, um eine Aufspaltung in ein reflektierendes und ein transmittierendes Lichtbündel zu verhindern. Benetzt nun ein Regentropfen den Lichtkanal, so gilt für den (von Scheibe-Luft zu Scheibe-Wasser) geänderten Medienübergang ein von 42° auf 60° vergrößerter Grenzwinkel, so dass nun ein großer Anteil des Lichts über diesen Tropfen austritt. Die nachlassende Lichtleitfähigkeit des Kanals wird an der Auskoppelstelle (wieder Prisma oder Ähnliches) mit Hilfe von Fotodioden oder Fototransistoren gemessen. Zur Gleichlicht- und Rauschunterdrükkung wird im Allgemeinen die Sendeleistung moduliert und das Empfängersignal phasenempfindlich gemessen.

Nach dem Prinzip der Totalreflexion arbeitende Regensensoren sind, außer aus dem obengenannten gattungsgemäßen Stand der Technik, unter anderem aus der US 5,998,782, der EP 0 893 317 A2 und der DE 195 30 289 A1 bekannt. Dabei ist es im Übrigen aus der DE 43 29 188 A1 auch bekannt, nicht wie üblich die Abschwächung der Strahlung durch Teilauskopplung, sondern, mittels eines außerhalb der Scheibe angeordneten Streustrahlungsempfängers, den ausgekoppelten und in den Tropfen teilreflektierten Strahlungsanteil als Nutzsignal auszuwerten.

Bei den bisherigen Regensensoren wird meistens nur ein sehr kleiner Bereich (wenige Zentimeter) der Frontscheibe auf Feuchtigkeit hin detektiert. Wünschenswert wäre ein größerer Bereich, der optimalerweise den gesamten Bereich, in dem der vom Regensensor je nach Regenmenge anzusteuernde Scheibenwischer tätig ist, umfassen sollte. Dies könnte, ohne wesentliche Störung der Sichtverhältnisse, erreicht werden, indem die Strahlung am oder in der Nähe eines Seitenrandes der Scheibe eingekoppelt und am gegenüberliegenden Seitenrand wieder ausgekoppelt wird. Andererseits würde jedoch der Strahlungskanal in diesem Fall auch in den Außenbereichen der Frontscheibe, also außerhalb des Wischbereichs, verlaufen. Da in den (nicht vom Wischer erfassten) Außenbereichen typischerweise auch dann (noch) eine Verschmutzung oder ein Beschlag auf der Scheibe vorliegt, wenn der Wischbereich bereits ausreichend trocken ist, würde der Regensensor unerwünschterweise Feuchtigkeit detektieren und gegebenenfalls die Wischanlage unnötig in Gang setzen.

Die vorliegende Erfindung schlägt demgegenüber einen Regensensor gemäß den kennzeichnenden Merkmalen des unabhängigen Patentanspruchs vor, um entlang des Strahlungskanals, d. h. entlang eines Teils der Scheibe, nicht-aktive, reine Ausbreitungsbereiche zur Verfügung zu stellen, in denen sich die Strahlung unabhängig von einer eventuellen Benetzung ungeschwächt, unter Totalreflexion, ausbreiten kann. Diese reinen Ausbreitungsbereiche werden damit effektiv aus der auf die aktiven Teilreflexionsbereiche begrenzte Detektionszone des Strahlungskanals bzw. Regensensors herausgenommen.

Im einzelnen zeichnet sich der erfindungsgemäße Regensensor nach Patentanspruch 1 dadurch aus, dass zwischen den Enden des Strahlungskanals mindestens ein weiteres an oder in der Scheibe angeordnetes Koppelmittel vorgesehen ist, durch das eine Umkopplung der eingekoppelten Strahlung erfolgt. Diese Umkopplung erfolgt in der Weise, dass zwischen den Enden des Strahlungskanals jeweils mindestens ein Ausbreitungsbereich und ein aktiver Teilreflexionsbereich gebildet sind, wobei die Strahlung in den mindestens einen Ausbreitungsbereich so ein- oder umgekoppelt ist, dass sie sich auch bei feuchter Scheibe unter Totalreflexion ausbreitet, während die Strahlung in den mindestens einen Teilreflexionsbereich so ein- oder umgekoppelt ist, dass sie sich nur bei trockener Scheibe unter Totalreflexion ausbreitet.

Durch diese erfindungsgemäßen Maßnahmen eröffnet sich die Möglichkeit, große Detektionszonen in frei wählbaren Scheibenbereichen zu schaffen.

Gemäß einer besonders vorteilhaften Ausführungsform der Erfindung ist vorgesehen, dass die Strahlung an einem Ende des Strahlungskanals in einen ersten Ausbreitungsbereich ein- und am anderen Ende des Strahlungskanals aus einem zweiten Ausbreitungsbereich ausgekoppelt wird, und dass zwischen den Enden des Strahlungskanals hintereinander zwei Koppelmittel vorgesehen sind, die die Strahlung so umkoppeln, dass zwischen den beiden äußeren Ausbreitungsbereichen ein innerer, aktiver Teilreflexionsbereich im Strahlungskanal gebildet ist. Dadurch kann die Scheibe durch die Frontscheibe eines Kraftfahrzeugs gebildet sein, wobei sich der Strahlungskanal praktisch über die gesamte Frontscheibe bis mindestens in die Nähe der Seitenränder der Frontscheibe erstreckt. Gleichzeitig ist die Ausdehnung des inneren, aktiven Teilreflexionsbereichs im Wesentlichen durch die seitliche Ausdehnung des Wischbereichs eines Scheibenwischers der Frontscheibe gegeben, so dass der Strahlungssender und der Strahlungsempfänger gegenüberliegend im Bereich der Seitenränder der Frontscheibe angeordnet werden können. Es wird demnach einerseits der gesamte Wischbereich detektiert, andererseits erfolgt die Detektion unabhängig von störenden Einflüssen durch Verschmutzung oder Feuchtigkeit auf den Außenbereichen der Frontscheibe.

Es ist von Vorteil, wenn, zur Detektion von Feuchtigkeit auf der Außenseite der Scheibe, an der Innenseite der Scheibe ein an der Innenseite mindestens im Bereich des Strahlungskanals wirksames Heizsystem zur Beseitigung von Kondenswasser vorgesehen ist. Dabei ist es von Vorteil, dass das Heizsystem als mindestens entlang eines Teils des Strahlungskanals verlaufender Heizdraht ausgebildet ist.

Vorteilhafterweise ist die Erfindung nicht auf Ausführungen begrenzt, in denen die Enden des Strahlungskanals durch eine Ein- bzw. Auskoppelstelle gebildet sind, an der jeweils ein entsprechendes Koppelmittel angeordnet ist. Vielmehr ist es ebenso möglich, dass ein Ende des Strahlungskanals durch eine Ein- und Auskoppelstelle gebildet ist, an der ein Koppelmittel angeordnet ist, und dass das andere Ende des Strahlungskanals durch ein Reflexionssystem oder eine reflektierende Begrenzung der Scheibe gebildet ist.

Gemäß einer weiteren Ausführungsform besteht die Möglichkeit, dass ein Strahlungsempfänger für die aus der Scheibe ausgekoppelte Strahlung vorgesehen ist, und dass zusätzlich ein nahe oder an der Scheibeninnenseite angeordneter Streustrahlungsdetektor für den in dem mindestens einen aktiven Teilreflexionsbereich aus der Scheibe austretenden und an den Feuchtigkeitstropfen zur Scheibeninnenseite hin reflektierten Strahlungsanteil vorgesehen ist.

Die Erfindung und ihre Vorteile werden nachfolgend anhand von mehreren Ausführungsbeispielen anhand der Figuren der Zeichnung noch näher erläutert. Es zeigen:
Figur 1 die prinzipielle Wirkungsweise der Erfindung anhand einer schematisierten Koppeloptik,
Figur 2, in gleicher Darstellung wie Figur 1, ein bevorzugtes Ausführungsbeispiel,
Figur 3a-c verschiedene Varianten der erfindungsgemäß eingesetzten Koppelmittel,
Figur 4a-b verschiedene Varianten hinsichtlich der Anordnung der Ein- und Auskoppelstelle der Strahlung,
Figur 5 eine Draufsicht auf eine mögliche Implementierung der Ausführungsform gemäß Figur 2 in der Frontscheibe eines Kraftfahrzeugs,
Figur 6 in Draufsicht eine schematische Darstellung einer Ausführungsform mit Heizsystem.

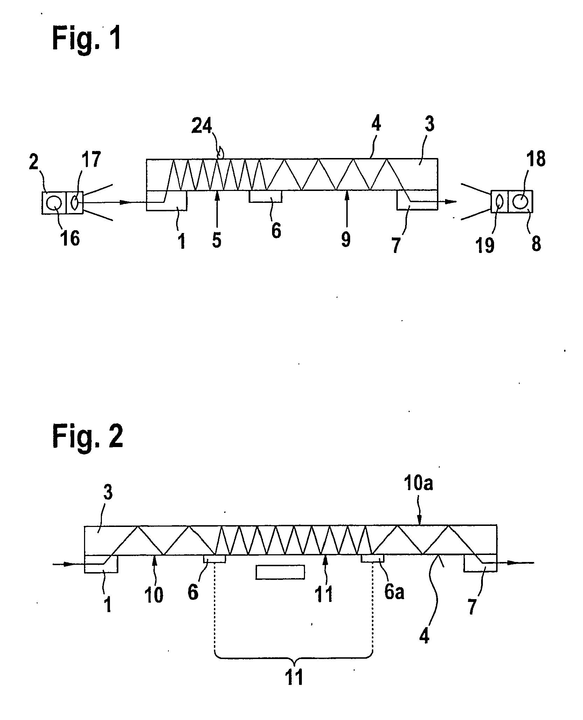

Figur 1 zeigt eine Ausführungsform, bei der ein Koppelmittel 1 die von einem Strahlungssender 2 erzeugte Strahlung an einer am Anfang des Strahlungskanals 3 liegenden Stelle in den Strahlungskanal 3 einkoppelt. Die Einkopplung erfolgt unter einem solchen Winkel zur Normalen der Scheibenoberfläche 4, dass ein aktiver Teilreflexionsbereich 5 gebildet ist, der sich bis zu einem zwischen den Enden des Strahlungskanals 3 angeordneten Koppelmittel 6 erstreckt. Das "zwischenliegende" Koppelmittel 6 koppelt den Winkel der Strahlung derart um, dass sie sich auf ihrem weiteren Weg bis zum Ende des Strahlungskanals 3, wo sie durch das weitere Koppelmittel 7 zu einem Strahlungsempfänger 8 hin ausgekoppelt wird, auch dann unter Beibehaltung der Totalreflexion ausbreitet, wenn in diesem durch die Koppelmittel 6 und 7 begrenzten reinen Ausbreitungsbereich 9 Feuchtigkeitstropfen 24 auf der Scheibenoberfläche 4 vorliegen sollten.

Die Detektionszone für Feuchtigkeit ist in dem in Figur 1 dargestellten Fall also ausschließlich durch den aktiven Teilreflexionsbereich 5 gegeben. Selbstverständlich ist auch die umgekehrte Anordnung (nicht dargestellt) möglich, bei der sich die Strahlung nach der Einkopplung zuerst durch einen reinen Ausbreitungsbereich 9 und anschließend, bis zur Auskopplung, durch den aktiven Teilreflexionsbereich 5 bewegt. Ferner ist es ohne weiteres möglich, mehrere Teilreflektionsbereiche 5 und Ausbreitungsbereiche 9 in einer durch ein gewünschtes Detektionszonenmuster vorgegebenen Weise zu detektieren, beispielsweise, aber nicht nur, in der im Folgenden beschriebenen bevorzugen Weise.

Figur 2 zeigt die bevorzugte Ausführungsform der Erfindung, bei der im Strahlungskanal 3, zusätzlich zu den Koppelmitteln 1 und 7, zwei hintereinander angeordnete "zwischenliegende" Koppelmittel 6 und 6a vorgesehen sind. Die primäre Einkopplung der Strahlung mit Hilfe des Koppelmittels 1 erfolgt bei dieser Ausführungsform unter einem Winkel von 60° bis 90° zur Normalen der Scheibenoberfläche 4. Dadurch resultiert im Inneren der Scheibe eine Strahlung, die sich unabhängig vom Benetzungsgrad der Oberfläche 4 im ersten reinen Ausbreitungsbereich 10 totalreflektierend ausbreitet, also insbesondere auch dann, wenn sie bei der Ausbreitung im Bereich 10 auf eine Grenzfläche,Glas-Wasser trifft. Im (ersten) Ausbreitungsbereich 10 treten demnach, analog wie beim bei Figur 1 diskutierten Ausbreitungsbereich 9, keine Strahlungsanteile aus dem Lichtleiter (Strahlungskanal) aus, d. h. dort etwaig vorhandene Feuchtigkeit wird nicht detektiert. Anschließend wird die Strahlung durch das Koppelmittel 6 so umgekoppelt, dass sie sich in einem aktiven Teilreflexionsbereich 11 unter einem Winkel von 42° bis 60° ausbreitet. Dieser neue Winkelbereich korrespondiert mit einer totalreflektierenden Ausbreitung im Bereich 11 nur im Falle einer Glas-Luft Grenzfläche, aber nicht für eine Glas-Wasser Grenzfläche. Eine Teilauskopplung wird in diesem (inneren, aber nicht unbedingt mittleren) aktiven Teilreflexionsbereich 11 des Strahlungskanals 3 also nur unter trockenen Bedingungen auf dem korrespondierenden Teil der Scheibenoberfläche 4 vermieden, während bei Feuchtigkeit ein Strahlungsanteil ausgekoppelt wird. Die entsprechende Abschwächung der im Strahlungskanal 3 verbleibenden gegenüber der ursprünglichen Strahlung wird im Folgenden ausgewertet.

Das in Figur 2 dargestellte weitere Koppelmittel 6a ist vorgesehen, um den Winkel der Strahlung wieder in einen Bereich von 60° bis 90° umzukoppeln, so dass vom Koppelmittel 6a bis zum weiteren Koppelmittel 7 am Ende des Strahlungskanals 3, mit dem die Strahlung aus der Scheibe ausgekoppelt wird, ein zweiter Ausbreitungsbereich 10a gebildet ist.

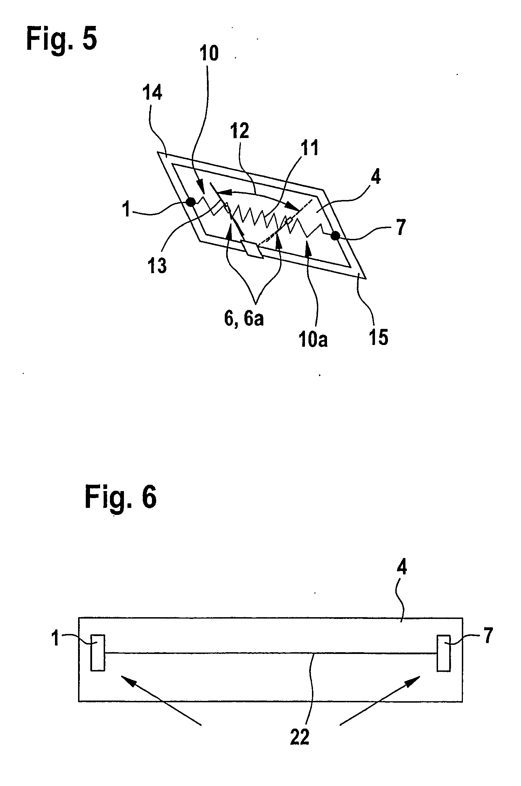

Vorteilhafterweise können die (Um)Koppelmittel 6 und 6a insbesondere so angeordnet werden, dass der innere, aktive Teilreflexionsbereich 11 im Wesentlichen mit dem in Figur 5 dargestellten Wischbereich 12 eines Scheibenwischers 13 übereinstimmt. Die "äußeren" Koppelmittel 1 und 7 bzw. der Strahlungssender und der Strahlungsempfänger 2 und 8 (beide in den Figuren 2 bis 6 nicht dargestellt) können dann im Bereich der Seitenränder 14 und 15, vgl. Figur 5, der Frontscheibe angeordnet werden. Der Strahlungskanal 3 erstreckt sich dann zwar in die nicht vom Wischer 13 erfassten Außenbereiche der Frontscheibe hinein, die Detektion von Feuchtigkeit ist jedoch auf den in seiner Ausdehnung auf das jeweils Gewünschte anpassbaren inneren, aktiven Teilreflexionsbereich 11 beschränkt. Die seitlich im Strahlungskanal 3 angeordneten Ausbreitungsbereiche 10 und 10a, vgl. Figur 2 und 5, sind demnach unter Aufrechterhaltung der Ausbreitung der Strahlung durch Totalreflexion aus der aktiven Detektionszone herausgenommen.

Obwohl bei allen Ausführungsformen vorausgesetzt, sind der Strahlungssender (Lichtmodul) 2 (und der Strahlungsempfänger 8) aus Gründen der Übersicht nur in Figur 1 dargestellt. Der Sender 2 umfasst dabei eine im UV-, sichtbaren oder Infrarotbereich arbeitende Lichtquelle 16 und eine kollimierende Optik 17. Es können sowohl kohärente wie inkohärente Strahlungsquellen 16 verwendet werden. Die kollimierende Optik 17 kann optische Elemente wie Glasplatten, Prismen, Linsen, Gitter oder Ähnliches umfassen und zur Variation der Wellenfront, der Intensität oder der Phase der Strahlung dienen. Der Strahlungssender 2 und insbesondere die kollimierende Optik 17 können in enger Verbindung mit den "äußeren" Koppelmitteln 1 und 7 ausgeführt bzw. aufgebaut sein.

In ähnlicher Weise kann der Strahlungsempfänger 8, vgl. Figur 1, aus einem optischen, mit der Arbeitswellenlänge und der Modulationsfrequenz der Strahlungsquelle 16 synchronisierten Detektor 18, zum Beispiel einer Fotodiode, und einer kollimierende Optik 19 bestehen, deren Charakteristika auf die der kollimierenden Optik 17 des Strahlungssenders 2 abgestimmt sind.

Die Sender- und Empfänger-Module 2 und 8 können in einer gemeinsamen Vorrichtung, beispielsweise dem Fuß eines Rückspiegels, angeordnet oder separat installiert werden. Das Zusammenspiel mit den Koppelmitteln 1 und 7 zum Ein- bzw. Auskoppeln der Strahlung in die Scheibe kann in an sich bekannter Weise durch Ausbreitung der Strahlung über einen Abstand hinweg oder durch unmittelbare Anordnung an den Koppelmitteln 1 und 7, bzw. an der Scheibenoberfläche 4 oder an den Rändern der Scheibe erfolgen.

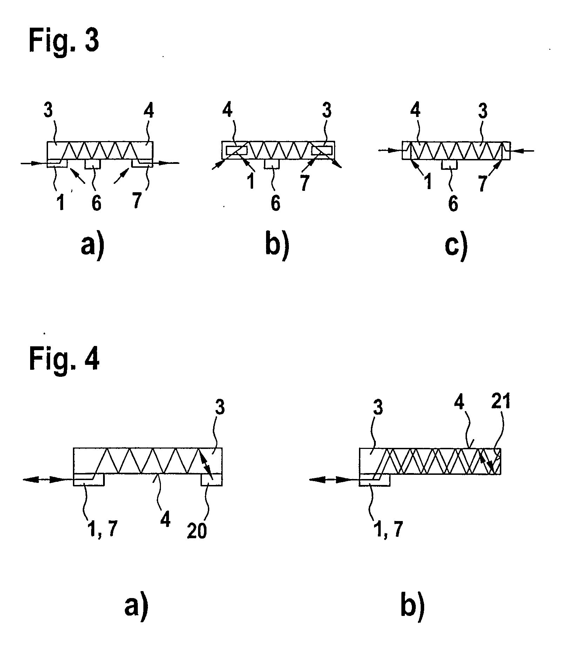

In der folgenden Figur 3 wurde, wie auch in Figur 4, der Übersichtlichkeit halber von der Darstellung der erfindungsgemäßen Umkopplung im Strahlungskanal 3 abgesehen.

Die Koppelmittel 1, 6, 6a und 7 zum Ein-, Aus- bzw. Umkoppeln der Strahlung können durch übliche optische Koppelelemente wie Glasplatten, Prismen, Linsen, Gitter oder Ähnliches oder durch optische Kopplungssysteme, also auch zur Variation der Wellenfront, der Intensität oder der Phase der Strahlung dienende Kombinationen optischer Elemente realisiert sein. Die Koppelmittel können, wie in Figur 3a gezeigt, und wie in der eingangs genannten DE 197 01 258 A1 näher beschrieben, planar auf der Glasscheibe aufgebaut sein. Beispielsweise kann eine separate Koppellinse mittels entsprechendem Zement auf der Scheibe befestigt sein. Die Koppelmittel 1, 6, 6a und 7 können aber auch durch optische, elektrische, mechanische, molekulare, atomare oder nukleare Methoden in das Material der wellenleitenden Glasscheibe integriert werden, wie in Figur 3b dargestellt. Die Koppelmittel 1, 6, 6a und 7 können ferner, wie in Figur 3c dargestellt, senkrecht zum Strahlungskanal 3, insbesondere an den Stirnflächen der wellenleitenden Scheibe, angeordnet sein. Die in Figur 3 dargestellten Anordnungen bzw. Aufbauten der Koppelmittel 1, 6, 6a und 7 können, auch zusammen mit Sender und Empfänger 2 und 8, je nach Anforderung miteinander kombiniert werden.

Grundsätzlich ist es je nach relativer Anordnung des Strahlungssenders 2 und -empfängers 8 und der Koppelmittel 1, 6, 6a und 7 möglich, die Messebene zur Detektion von Feuchtigkeit zu variieren, d. h. insbesondere auf die Außen- oder die Innenseite 4 der Scheibe auszurichten.

Figur 4 zeigt Ausführungsformen der Erfindung, bei denen sich die Strahlung von einem Ende des Strahlungskanals 3 zum anderen und wieder zurück ausbreitet, also die Strahlung an der Einkoppelstelle auch wieder ausgekoppelt wird. Dies kann Vorteile hinsichtlich der Anordnung bzw. des Platzverbrauchs der Sender/Empfängermodule 2 und 8 ermöglichen. Wie erkennbar, ist der Anfang des Strahlungskanals 3 durch eine Ein- und Auskoppelstelle gebildet, an der ein Koppelmittel 1, 7 angeordnet ist. Das Ende des Strahlungskanals 3 ist entweder durch ein Reflexionssystem 20, vgl. Figur 4a, oder eine reflektierende Begrenzung 21, vgl. Figur 4b, der Scheibe gebildet.

Figur 5 zeigt die bereits im Zusammenhang mit den Figuren 1 und 2 erörterte Gesamtansicht einer mit einem erfindungsgemäßen Regensensor ausgestatteten Kfz-Frontscheibe.

Gemäß einer vorteilhaften, in Figur 6 nur schematisch dargestellten Ausführungsform der Erfindung ist es möglich, ein Heizsystem, insbesondere einen Heizdraht 22 vorzusehen, um gegebenenfalls innerhalb von zirka zwei bis drei Sekunden Kondenswasser von der Innenseite 4 einer Kraftfahrzeug-Frontscheibe durch Verdampfen zu entfernen. Das Heizsystem kann auf der Innenseite 4 der Scheibe aufgebaut bzw. eingebettet oder in die Scheibe integriert ausgeführt werden.

Gemäß einer weiteren Ausführungsform der Erfindung besteht die Möglichkeit, zusätzlich zum Strahlungsempfänger 8 einen nahe oder an der Scheibeninnenseite 4 anzuordnenden Streustrahlungsdetektor 23, vgl. Figur 2, für den in dem mindestens einen aktiven Teilreflexionsbereich 5, 11 aus der Scheibe austretenden und an den Feuchtigkeitstropfen 24 zur Scheibeninnenseite 4 hin reflektierten Strahlungsanteil vorzusehen. Dieser Streustrahlungsdetektor 23, z. B. eine Fotodiode, wird mit der Lichtquelle 16 des Senders 2 synchronisiert und misst den Benetzungsgrad, also die Stärke des Regens, auf der Scheibe. Eine alternative Möglichkeit, die Stärke des Regens messen zu können, besteht darin, eine eigene, zusätzliche Lichtquelle mit einem zugehörigen, synchronisierten Empfänger vorzusehen. In diesem Fall können das Vorliegen von Regen und dessen Stärke unabhängig voneinander gemessen werden. Das quantitative Signal kann zur Steuerung der Wischgeschwindigkeit eingesetzt werden.

Grundsätzlich besteht darüber hinaus die Möglichkeit, durch entsprechende Verarbeitung der Signale des Empfängers 8 und des Streustrahlungsdetektors 23 im Zusammenspiel mit dem Heizsystem die Stärke das Kondensats auf der Innenseite 4 der Frontscheibe festzustellen und zur Ansteuerung des im Kfz vorhandenen Gebläses einzusetzen.

## Patentansprüche

1. Regensensor zur Detektion von Feuchtigkeit auf einer Glasscheibe, insbesondere einer Frontscheibe eines Kraftfahrzeugs, mit an oder in der Scheibe angeordneten Koppelmitteln (1, 7), die die von mindestens einem Strahlungssender (2) ausgesandte Strahlung so in die Scheibe ein- bzw. auskoppeln, dass sich die Strahlung bei trockener Scheibe unter mehrfacher Totalreflexion an den Scheibenoberflächen (4) entlang eines Strahlungskanals (3) in der Scheibe ausbreitet,
**dadurch gekennzeichnet,**
- **dass** zwischen den Enden des Strahlungskanals (3) mindestens ein weiteres an oder in der Scheibe angeordnetes Koppelmittel (6, 6a) vorgesehen ist, durch das eine Umkopplung der eingekoppelten Strahlung erfolgt, derart,
- **dass** zwischen den Enden des Strahlungskanals (3) jeweils mindestens ein Ausbreitungsbereich (9, 10, 10a) und ein aktiver Teilreflexionsbereich (5, 11) gebildet sind, wobei die Strahlung in den mindestens einen Ausbreitungsbereich (9, 10, 10a) so ein- oder umgekoppelt ist, dass sie sich auch bei feuchter Scheibe unter Totalreflexion ausbreitet, während die Strahlung in den mindestens einen Teilreflexionsbereich (5, 11) so ein- oder umgekoppelt ist, dass sie sich nur bei trockener Scheibe unter Totalreflexion ausbreitet.

2. Regensensor nach Anspruch 1, **dadurch gekennzeichnet, dass** die Strahlung an einem Ende des Strahlungskanals (3) in einen ersten Ausbreitungsbereich (10) ein- und am anderen Ende des Strahlungskanals (3) aus einem zweiten Ausbreitungsbereich (10a) ausgekoppelt wird, und dass zwischen den Enden des Strahlungskanals (3) hintereinander zwei Koppelmittel (6, 6a) vorgesehen sind, die die Strahlung so umkoppeln, dass zwischen den beiden äußeren Ausbreitungsbereichen (10, 10a) ein innerer, aktiver Teilreflexionsbereich (11) im Strahlungskanal (3) gebildet ist.

3. Regensensor nach Anspruch 1 oder 2, **dadurch gekennzeichnet, dass** die Feuchtigkeit auf der Außenseite (4) der Scheibe detektiert wird, und dass an der Innenseite (4) der Scheibe ein an der Innenseite (4) mindestens im Bereich des Strahlungskanals (3) wirksames Heizsystem zur Beseitigung von Kondenswasser vorgesehen ist.

4. Regensensor nach Anspruch 3, **dadurch gekennzeichnet, dass** das Heizsystem als mindestens entlang eines Teils des Strahlungskanals (3) verlaufender Heizdraht (22) ausgebildet ist.

5. Regensensor nach einem der Ansprüche 1 bis 4, **dadurch gekennzeichnet, dass** die Enden des Strahlungskanals (3) durch eine Ein- bzw. Auskoppelstelle gebildet sind, an der jeweils ein entsprechendes Koppelmittel (1, 7) angeordnet ist.

6. Regensensor nach einem der Ansprüche 1 bis 4, **dadurch gekennzeichnet, dass** ein Ende des Strahlungskanals (3) durch eine Ein- und Auskoppelstelle gebildet ist, an der ein Koppelmittel (1, 7) angeordnet ist, und dass das andere Ende des Strahlungskanals (3) durch ein Reflexionssystem (20) oder eine reflektierende Begrenzung (21) der Scheibe gebildet ist.

7. Regensensor nach einem der Ansprüche 1 bis 6, **dadurch gekennzeichnet, dass** ein Strahlungsempfänger (8) für die aus der Scheibe ausgekoppelte Strahlung vorgesehen ist, und dass zusätzlich ein nahe oder an der Scheibeninnenseite (4) angeordneter Streustrahlungsdetektor (23) für den in dem mindestens einen aktiven Teilreflexionsbereich (5, 11) aus der Scheibe austretenden und an den Feuchtigkeitstropfen (24) zur Scheibeninnenseite (4) hin reflektierten Strahlungsanteil vorgesehen ist.

8. Regensensor nach einem der Ansprüche 2 bis 7, **dadurch gekennzeichnet, dass** die Scheibe durch die Frontscheibe eines Kraftfahrzeugs gebildet ist, dass sich der Strahlungskanal (3) über die Frontscheibe bis mindestens in die Nähe der Seitenränder (14, 15) der Frontscheibe erstreckt, und dass die Ausdehnung des inneren, aktiven Teilreflexionsbereichs (11) im Wesentlichen durch die seitliche Ausdehnung des Wischbereichs (12) eines Scheibenwischers (13) der Frontscheibe gegeben ist.

9. Regensensor nach Anspruch 8, **dadurch gekennzeichnet, dass** der Strahlungssender (2) und der Strahlungsempfänger (8) gegenüberliegend im Bereich der Seitenränder (14, 15) der Frontscheibe angeordnet sind.

## Claims

1. Rain sensor for detecting moisture on a glass pane, in particular a front windscreen of a motor vehicle, having coupling means (1, 7) which are arranged on or in the pane and input or output the radiation emitted by at least one radiation transmitter (2) into the pane such that the radiation propagates in the pane along a radiation channel (3) under multiple total internal reflection at the pane surfaces (4) when the pane is dry, **characterized in that**
- between the ends of the radiation channel (3) there is provided at least one further coupling means (6, 6a) arranged on or in the pane, by means of which the input radiation is switched such that
- between the ends of the radiation channel (3) in each case at least one propagation region (9, 10, 10a) and an active partial reflection region (5, 11) are formed, with the radiation being input into or switched to the at least one propagation region (9, 10, 10a) such that it propagates under total internal reflection even when the pane is wet, whereas the radiation is input into or switched to the at least one partial reflection region (5, 11) such that it only propagates under total internal reflection when the pane is dry.

2. Rain sensor according to Claim 1, **characterized in that** the radiation at one end of the radiation channel (3) is input into a first propagation region (10) and at the other end of the radiation channel (3) is output from a second propagation region (10a), and **in that** between the ends of the radiation channel (3) two successive coupling means (6, 6a) are provided which switch the radiation in such a way that an inner active partial reflection region (11) is formed in the radiation channel (3) between the two outer propagation regions (10, 10a).

3. Rain sensor according to Claim 1 or 2, **characterized in that** the moisture on the outside (4) of the pane is detected and **in that** on the inside (4) of the pane a heating system, which is active on the inside (4) at least in the region of the radiation channel (3), is provided for removing condensation.

4. Rain sensor according to Claim 3, **characterized in that** the heating system is designed as a heating wire (22) which extends at least along part of the radiation channel (3).

5. Rain sensor according to one of Claims 1 to 4, **characterized in that** the ends of the radiation channel (3) are formed by an input or output location at which in each case a corresponding coupling means (1, 7) is arranged.

6. Rain sensor according to one of Claims 1 to 4, **characterized in that** one end of the radiation channel (3) is formed by an input and output location at which a coupling means (1, 7) is arranged and **in that** the other end of the radiation channel (3) is formed by a reflection system (20) or a reflective boundary (21) of the pane.

7. Rain sensor according to one of Claims 1 to 6, **characterized in that** a radiation receiver (8) for the radiation output from the pane is provided and **in that** additionally a scatter radiation detector (23) is provided, which is arranged near or on the inside (4) of the pane, for the radiation component which leaves the pane in the at least one active partial reflection region (5, 11) and is reflected at the moisture drops (24) towards the inside (4) of the pane.

8. Rain sensor according to one of Claims 2 to 7, **characterized in that** the pane is formed by the front windscreen of a motor vehicle, **in that** the radiation channel (3) extends across the front windscreen up to at least near the lateral edges (14, 15) of the front windscreen, and **in that** the extent of the inner active partial reflection region (11) is substantially defined by the lateral extent of the wiping region (12) of a windscreen wiper (13) of the front windscreen.

9. Rain sensor according to Claim 8, **characterized in that** the radiation transmitter (2) and the radiation receiver (8) are arranged in the region of the lateral edges (14, 15) of the front windscreen such that they face one another.

## Revendications

1. Capteur de pluie pour détecter l'humidité déposée sur une vitre, notamment le pare-brise d'un véhicule automobile, comportant des moyens de couplage (1, 7) sur ou dans la vitre, pour coupler et découpler de la vitre le faisceau émis par au moins un émetteur de faisceau (2),
le faisceau se déployant dans la vitre sèche par de multiples réflexions totales à la surface (4) de la vitre, le long d'un canal de faisceau (3),
**caractérisé par**
- au moins un autre moyen de couplage (6, 6a) entre les extrémités du canal de faisceau (3), sur ou dans la vitre qui assure le découplage du faisceau injecté de façon qu'
- au moins une zone de déploiement (9, 10, 10a) et une zone de réflexion partielle active (10, 11), respectives se trouvent entre les extrémités du canal de faisceau (3),
le faisceau étant couplé ou découplé dans au moins une zone de déploiement (9, 10, 10a) pour que même en cas de vitre humide, il se développe une réflexion totale alors que le faisceau est injecté ou découplé dans au moins une zone de réflexion partielle (5, 11) de façon à ne se déployer par réflexion totale que si la vitre est sèche.

2. Capteur de pluie selon la revendication 1,
**caractérisé en ce que**
le faisceau est couplé à une extrémité du canal de faisceau (3) dans une première zone de déploiement (10) et est découplé à l'autre extrémité du canal de faisceau (3) d'une seconde zone de déploiement (10a) et
entre les extrémités du canal de faisceau (3) on a successivement deux moyens de couplage (6, 6a) qui couplent le faisceau pour former entre les deux zones de déploiement extérieures (10, 10a), une zone intérieure active de réflexion totale (11) dans le canal de faisceau (3).

3. Capteur de pluie selon la revendication 1 ou 2,
**caractérisé en ce qu'**
on détecte l'humidité sur le côté extérieur (4) de la vitre et sur le côté intérieur (4) de la vitre il est prévu un système de chauffage actif au moins sur le côté intérieur (4) d'au moins une zone du canal de faisceau (3) pour éliminer l'eau de condensation.

4. Capteur de pluie selon la revendication 3,
**caractérisé en ce que**
le système de chauffage est sous la forme d'un fil chauffant (22) s'étendant au moins le long d'une partie du canal de faisceau (3).

5. Capteur de pluie selon l'une des revendications 1 à 4,
**caractérisé en ce que**
les extrémités du canal de faisceau (3) sont constituées par un point de couplage ou de découplage munis chacun d'un moyen de couplage correspondant (1, 7).

6. Capteur de pluie selon l'une des revendications 1 à 4,
**caractérisé en ce qu'**
une extrémité du canal de faisceau (3) est formée par un point de couplage et de découplage muni d'un moyen de couplage (1, 7) et l'autre extrémité du canal de faisceau (3) est formée par un système de réflexion (20) ou une limite réfléchissante (21) de la vitre.

7. Capteur de pluie selon l'une des revendications 1 à 6,
**caractérisé par**
un capteur de faisceau (8) pour le faisceau découplé de la vitre et en ce qu'en plus il est prévu un détecteur de faisceau dispersé (23) à proximité du côté intérieur de la vitre (4) ou sur le côté intérieur de la vitre pour la partie du faisceau sortant de la vitre dans au moins une zone de réflexion partielle active (5, 11) et réfléchie vers le côté intérieur de la vitre (4) par les gouttelettes d'humidité (24).

8. Capteur de pluie selon l'une des revendications 2 à 7,
**caractérisé en ce que**
la vitre est le pare-brise d'un véhicule, le canal de faisceau (3) s'étend sur le pare-brise jusqu'au moins à proximité des bords latéraux (14, 15) du pare-brise et **en ce que** l'extension de la plage de réflexion partielle (11) active intérieure est constituée principalement par l'extension latérale de la plage d'essuyage (12) d'un essuie-glace (13) du pare-brise.

9. Capteur de pluie selon la revendication 8,
**caractérisé en ce que**
l'émetteur de faisceau (2) et le récepteur de faisceau (8) sont situés de façon opposée au niveau des bords latéraux (14, 15) du pare-brise.
